# EUROPÄISCHE PATENTANMELDUNG

(11) **EP 2 068 170 A1**
(43) Veröffentlichungstag der Anmeldung: **10.06.2009**
(21) Anmeldenummer: 08105546.9
(22) Anmeldetag: 10.10.2008
(51) Int. Cl.: G01S 7/41, G01S 13/60, G01B 11/00, G01P 3/80, G01S 13/75

(54) **Verfahren zur berührungslosen Erfassung von Ortsgrößen eines Objekts**

(30) Priorität: 03.12.2007 DE 102007058083
(71) Anmelder: Robert Bosch GmbH, 70442 Stuttgart (DE)
(72) Erfinder: Seidel, Juergen, 73728 Esslingen (DE); Hasch, Juergen, 70195 Stuttgart (DE); Waldschmidt, Christian, 70197 Stuttgart (DE)

(57) **Zusammenfassung**

Es werden ein Verfahren und eine Vorrichtung (10) zur berührungslosen Bestimmung von Ortsgrößen eines Objekts vorgestellt, indem das Objekt mit einem Signal abgetastet wird, wobei die Beschaffenheit einer Oberfläche des Objekts ausgenutzt wird.

## Beschreibung

### Stand der Technik

Die Erfindung betrifft ein Verfahren und eine Vorrichtung zur berührungslosen Erfassung von Ortsgrößen eines Objekts. Die Erfindung betrifft weiterhin ein Computerprogramm und ein Computerprogrammprodukt zur Durchführung des Verfahrens.

Zur Erfassung von Ortsgrößen, wie bspw. Position, Bewegung, Drehwinkel bzw. Drehlage usw., eines Objekts sind berührungslose Verfahren bekannt. Bei diesen wird vornehmlich zwischen optischen und magnetischen Verfahren unterschieden. Bei optischen Verfahren wird üblicherweise ein optisches Strichgitter auf dem zu messenden Objekt aufgebracht, abgetastet und ausgewertet. Bei magnetischen Verfahren wird typischerweise mit Hilfe eines Hallsensors ein auf dem zu messenden Objekt aufgebrachte magnetische Codierung abgetastet und ausgewertet.

Bei solchen Messverfahren ist bekannt, dass mit diesen eine inkrementelle Auswertung realisiert werden kann, wobei während der Bewegung Position oder Geschwindigkeit ermittelt wird. Eine weitere Möglichkeit stellt die absolute Positionsmessung durch das Aufbringen eines mehrstrichigen Codes und das gleichzeitige Auslesen des Codes mit Hilfe mehrerer Sensoren dar.

Es sind weiterhin Verfahren bekannt, bei denen zur Positionsmessung Mikrowellen eingesetzt werden, wobei bei diesen Verfahren aufgebrachte Codes mit Hilfe von Mikrowellen abgetastet werden. Diese Mikrowellen können bspw. von einer sogenannten Mikrowellenradarvorrichtung bereitgestellt werden.

Es ist bspw. ein Verfahren zur Erfassung der linearen Bewegung oder des Drehwinkels von bewegten Objekten bekannt, bei dem die Objekte eine Codespur tragen, die berührungslos von einer Sensoranordnung abtastbar ist und mit der ein von der Bewegung des Objekts relativ zur Sensoranordnung generiertes Signal auswertbar ist. Dabei kann vorgesehen sein, dass die Codespur aus einem Relief einer sich mit in der Bewegungsrichtung ändernden Oberflächenstruktur hinsichtlich Vertiefungen und/oder Erhöhungen besteht. Die Sensoranordnung umfasst mindestens einen Sender und einen Empfänger eines Mikrowellenradars zur Abtastung der Codespur.

### Offenbarung der Erfindung

Das erfindungsgemäße Verfahren dient zur berührungslosen Bestimmung von Ortsgrößen eines Objekts. Dabei wird das Objekt mit einem Signal abgetastet, wobei die Beschaffenheit einer Oberfläche des Objekts ausgenutzt wird. Das Signal wird dabei typischerweise von einem Sender bereitgestellt und nach Reflexion an der Oberfläche des Objekts als reflektiertes Signal von mindestens einem Empfänger erfasst. Der Verlauf des erfassten Signals ermöglicht Rückschlüsse auf die zu bestimmende Ortsgröße des Objekts.

Es wird folglich bereits eine dem Objekt zugeordnete Eigenschaft, nämlich die Beschaffenheit einer Oberfläche des Objekts, zur Bestimmung der Ortsgröße ausgenutzt. Diese Beschaffenheit beeinflusst das Reflexionsverhalten des abtastenden Signals, so dass das an der Oberfläche reflektierte Signal zur Bestimmung der Ortsgröße herangezogen wird.

Im Gegensatz zu bekannten Verfahren wird somit keine zusätzliche Codierung aufgebracht, sondern lediglich die vorhandene Beschaffenheit der Oberfläche des Objekts, wie bspw. die Oberflächenrauhigkeit und Unebenheiten, ausgenutzt. Dies ermöglicht eine wesentlich kostengünstigere Vorgehensweise, da der zusätzliche Schritt des Aufbringens der Codierung entfallen kann.

Es wird deutlich, dass die Beschaffenheit einer Oberfläche lediglich des Objekts und nicht die Beschaffenheit einer zusätzlich bzw. nachträglich aufgebrachten Codierung berücksichtigt wird. Diese Codierung ist nämlich nicht Bestandteil des zu bestimmenden Objekts, sondern wird nachträglich in einem zusätzlichen Schritt aufgebracht. Dieser zusätzliche Schritt ist erfindungsgemäß nicht erforderlich, da die Beschaffenheit einer Oberfläche des eigentlichen Objekts herangezogen wird.

Als Ortsgrößen können die Position und/oder ein Drehwinkel bzw. die Drehlage des Objekts und damit auch weitere Größen, wie bspw. die Geschwindigkeit, die Beschleunigung und die Bewegungsrichtung des Objekts, bestimmt werden. Das Objekt kann sich frei auf einer Fläche oder auch im Raum bewegen, wobei dessen genaue Position, Drehlage sowie die Bewegungsrichtung und auch die Beschleunigung bestimmt werden können.

Das Verfahren ermöglicht eine inkrementelle Bestimmung und eine absolute Bestimmung der zu erfassenden Ortsgröße.

Es bietet sich an, als abtastendes Signal ein von einer Mikrowellenradarvorrichtung erzeugtes Signal einzusetzen. Der bevorzugte Frequenzbereich liegt dabei zwischen 76 und 81 GHz oder zwischen 122 und 123 GHz. Insbesondere der Bereich von 122 bis 123 GHz ist für Kurzbereichsanwendungen zugelassen.

Die erfindungsgemäße Vorrichtung zur berührungslosen Erfassung von Ortsgrößen eines Objekts dient besonders zur Durchführung eines vorstehend beschriebenen Verfahrens und umfasst einen Sender zum Senden eines Signals zu dem Objekt und einen Empfänger zum Erfassen eines von dem Objekt reflektierten Signals, wobei die Oberflächenbeschaffenheit des Objekts ausgenutzt wird. Die Vorrichtung ist dazu ausgelegt, das reflektierte Signal zu erfassen und anhand dessen Verlauf unter Berücksichtigung der Oberflächenbeschaffenheit die zu ermittelnde Ortsgröße zu bestimmen.

Die beschriebene Vorrichtung kann insbesondere als Mikrowellenradarvorrichtung mit einem Mikrowellensender und Mikrowellenempfänger ausgebildet sein. Eine solche Mikrowellenradarvorrichtung ermöglicht eine genaue Bestimmung der interessierenden Ortsgröße.

Dabei kann bspw. ein Dauerstrichsignal einer vorgegebenen Arbeitsfrequenz in Richtung des Objekts gesendet werden und eine Phasenänderung des reflektierten Signals aufgrund der Oberflächenbeschaffenheit des Objekts ermittelt werden.

Das erfindungsgemäße Computerprogramm umfasst Programmcodemittel, um alle Schritte eines vorstehend beschriebenen Verfahrens durchzuführen, wenn das Computerprogramm auf einem Computer oder einer entsprechenden Recheneinheit, insbesondere in einer dargelegten Vorrichtung, ausgeführt wird.

Somit ermöglicht die Erfindung, zumindest in ihren Ausführungsformen, eine inkrementelle oder absolute Bestimmung der Position oder des Drehwinkels eines Objekts. Dabei ist der Anwendungsbereich groß, da das beschriebene Verfahren bei allen Drehwinkel- oder Weglängenmessungen eingesetzt werden kann. Als mögliche Anwendungen kommen in Betracht:
- die Messung der Hubhöhe von hydraulischen oder pneumatischen Zylindern,
- Die Messung der Position von Kraftfahrzeugscheiben,
- die Messung des Lenkwinkels von Kraftfahrzeugen,
- die Messung der Position von mechanischen Stellern sowie Wellen zur Steuerung mechanischer Abläufe im Kfz,
- industrielle Weg- und Drehwinkelmesstechnik

Im Gegensatz zu bekannten Verfahren ist es nicht mehr notwendig, eine gesonderte Codierung auf die zu erfassenden Objekte aufzubringen. Mit der Erfindung wird die bestehende Oberflächenbeschaffenheit, wie die Oberflächenrauhigkeit oder vorhandene Unebenheiten, ausgenutzt. Eine gesonderte Codierung bzw. ein Aufbringen einer Codierung ist nicht erforderlich.

Ein Vorteil gegenüber bekannten Verfahren ist insbesondere die Unempfindlichkeit gegenüber Schmutz, Staub, Druck, Licht und anderen Umwelteinflüssen. Weiterhin lässt sich das Messprinzip auch in Medien einsetzen, wie bspw. innerhalb eines mit Öl gefüllten Behälters. Wird eine Mikrowellenradarvorrichtung eingesetzt, ist von Vorteil, dass sich die benötigte Hochfrequenzschaltung sehr gut auf Basis eines Ein-Chip-Radars integrieren lässt. Das Antennenelement kann dabei auf der integrierten Schaltung zusammen mit einem externen Element realisiert werden.

Weiterhin ist zu beachten, dass bei dem erfindungsgemäße Verfahren bei Einsatz einer Mikrowellenradarvorrichtung im Gegensatz zu optischen oder magnetischen Verfahren der Hochfrequenzsensor sich sehr gut mit Silizium-Standard-Prozessen realisieren lässt. Damit kann die notwendige Auswerteschaltung ebenfalls auf derselben Halbleiterschaltung realisiert werden. Außerdem lassen sich hohe Betriebstemperaturen ohne relevante Reduzierung der Lebensdauer der Schaltung verwirklichen, was oftmals bei optischen und auch magnetischen Bauelementen problematisch ist. Die erfindungsgemäße Vorrichtung eignet sich somit insbesondere für Messungen über längere Zeiträume und in schlecht zugänglichen Messumgebungen.

Da keine zusätzliche Oberflächenbearbeitung notwendig ist, ist der nachträgliche Einbau eines Messsystems vereinfacht, wodurch Kosten eingespart werden können.

Das beschriebene Verfahren ist insbesondere bei statistisch zumindest nahezu zufälligen Oberflächenbeschaffenheiten geeignet. Oberflächen mit periodischen Strukturen sind weniger geeignet.

Des weiteren kann das vorgestellte Verfahren auch zusammen mit einem codierungslesenden Verfahren eingesetzt werden. Dabei stellt sie Codierung eine relativ grob gerasterte inkrementelle Absolutmessung dar und die Auswertung der Oberflächenbeschaffenheit erweitert die Genauigkeit durch eine hochauflösende Relativmessung.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in den Zeichnungen schematisch dargestellt und wird im folgenden unter Bezugnahme auf die Zeichnungen ausführlich beschrieben.

### Kurze Beschreibung der Zeichnungen

- Figur 1: zeigt in schematischer Darstellung eine mögliche Ausführungsform der erfindungsgemäßen Vorrichtung.
- Figur 2: zeigt in schematischer Darstellung eine weitere mögliche Ausgestaltung der erfindungsgemäßen Vorrichtung.

### Ausführungsformen der Erfindung

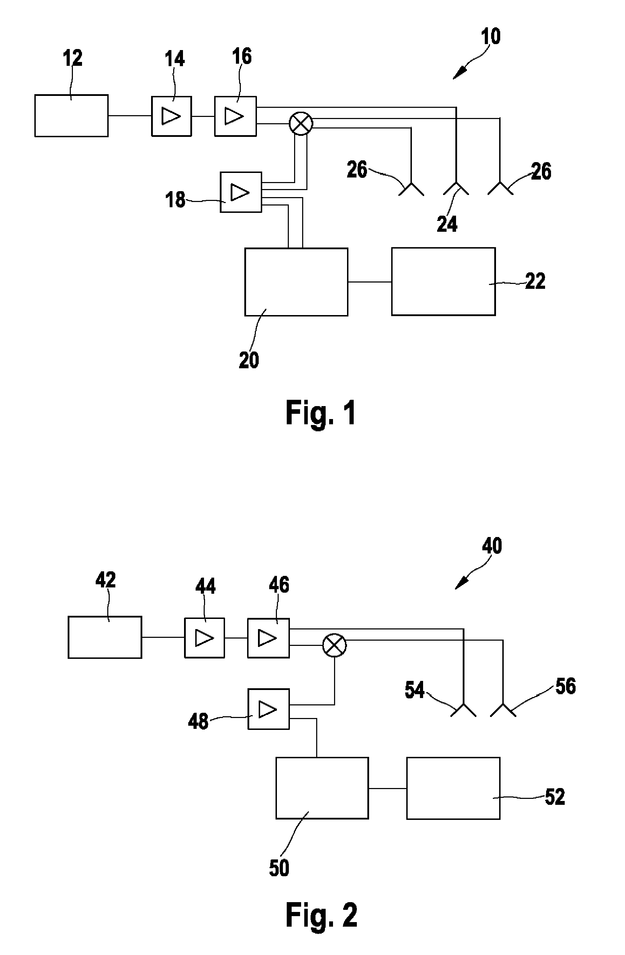

In Figur 1 ist eine mögliche Ausführung der erfindungsgemäßen Vorrichtung, insgesamt mit der Bezugsziffer 10 bezeichnet, dargestellt. Diese Vorrichtung 10 ist als Radarchip ausgebildet und umfasst einen Oszillator 12 zur Bereitstellung eines Mikrowellensignals, einen Verstärker 14, einen Splitter 16, einen Niederfrequenzverstärker 18, eine Einheit 20, die einen A/D-Wandler und eine Signalverarbeitung realisiert, und einen Speicher 22, der in diesem Fall als nichtflüchtiger Speicher ausgebildet ist. Weiterhin sind ein Sendeelement 24 und zwei Empfangselemente 26 vorgesehen. Die Vorrichtung 10 ist in dieser Ausführungsform folglich mit zwei Empfangselementen 26 ausgebildet.

Sind zwei Empfangselemente 26 vorgesehen, empfangen diese ein zueinander zeitlich versetztes Messsignal. Durch Korrelation der empfangenen Signale kann auf den zurückgelegten Weg oder Drehwinkel zurückgeschlossen werden. Dieses Prinzip ist auch als "Speckle-Radar" bekannt.

Wird das durch eine einmalige Referenzfahrt aufgenommene Oberflächenprofil in dem nichtflüchtigen Speicher 22 abgelegt, kann durch Vergleich zwischen aktuell gemessenen und abgelegtem Wert auch eine Absolutmessung erfolgen.

In Figur 2 ist eine weitere Ausführungsform der Vorrichtung, insgesamt mit der Bezugsziffer 40 bezeichnet, dargestellt. Die Darstellung zeigt wiederum einen Oszillator 42, einen Verstärker 44, einen Splitter 46, einen Niederfrequenzverstärker 48, eine Einheit 50 für eine A/D-Wandlung und Signalverarbeitung und einen Speicher 52. Die Vorrichtung 40 umfasst ein Sendeelement 54 und ein Empfangselement 56.

Ein System mit nur einem Empfangselement 56 benötigt zwingend den Speicher 50, da hier die Korrelation zwischen dem im Speicher 50 abgelegten und dem aktuell gemessenen Signal korreliert wird. Die Absolutmessfähigkeit bleibt dabei erhalten.

Die dargestellten Sendeelemente 24 und 52 und Empfangselemente 26 und 56 arbeiten in den hier dargestellten Ausführungen in einem Frequenzbereich von 122 bis 123 GHz, der für Kurzbereichsanwendungen nach der R&TTE-Direktive zugelassen ist.

Der prinzipielle Aufbau der in den Figuren 1 und 2 dargestellten Vorrichtungen 10 und 40 ist ein Radar-Chip, der zweckmäßigerweise in unmittelbarer Nähe des zu messenden Objekts angebracht wird. Vom Radar-Chip wird ein Signal in Richtung des Objekts abgestrahlt, von dort reflektiert und wieder vom Radar-Chip empfangen. Im Gegensatz zu bekannten Verfahren wird aber kein besonderer Code, sondern das zufällige Muster der Oberflächenrauhigkeit abgetastet.

Die dabei verwendeten Vorrichtungen 10 und 40 weisen ein Sendeelement 24 bzw. 54 und einen oder zwei Empfangselemente 26 bzw. 56 auf. Der oder die Empfangselemente 26 bzw. 56 sind (bei mehreren Empfangselementen in räumlichem Abstand) entlang der Messrichtung angebracht und empfangen so das von der Oberfläche des Objekts reflektierte Sendesignal.

Von Vorteil bei den dargestellten Vorrichtungen 10 und 40 ist deren gute Integrierbarkeit auf Basis eines Ein-Chip-Radars. Auch ein nicht näher dargestelltes Antennenelement kann in der integrierten Schaltung aufgenommen werden. Außerdem kann die Auswerteschaltung ebenfalls integriert werden.

Das Verfahren benötigt Oberflächen, deren Beschaffenheiten zumindest nahezu statistisch verteilt sind. Oberflächen mit periodischen Strukturen sind nicht für dieses Messprinzip geeignet.

Das Verfahren kann auch zusammen mit einem codierungslesenden Verfahren eingesetzt werden. Dabei stellt die Codierung eine relativ grob gerasterte inkrementelle Absolutmessung dar und die Auswertung der Oberflächenrauhigkeit erweitert die Genauigkeit durch eine hochauflösende Relativmessung.

Das vorgestellte Verfahren eignet sich insbesondere zur Wegmessung von hydraulischen und pneumatischen Zylindern. Es bietet sich aber auch im gesamten Bereich der industriellen Weg- und Drehwinkelmesstechnik an. Dabei ist besonders die Unempfindlichkeit gegenüber Verunreinigungen von Vorteil.

## Patentansprüche

1. Verfahren zur berührungslosen Bestimmung von Ortsgrößen eines Objekts, indem das Objekt mit einem Signal abgetastet wird, wobei die Beschaffenheit einer Oberfläche des Objekts ausgenutzt wird.

2. Verfahren nach Anspruch 1, bei dem eine Position des Objekts bestimmt wird.

3. Verfahren nach Anspruch 1, bei dem ein Drehwinkel des Objekts bestimmt wird.

4. Verfahren nach einem der Ansprüche 1 bis 3, bei dem eine inkrementelle Bestimmung der Ortsgröße erfolgt.

5. Verfahren nach einem der Ansprüche 1 bis 3, bei dem eine absolute Bestimmung der Ortsgröße erfolgt.

6. Verfahren nach einem der Ansprüche 1 bis 5, bei dem als abtastendes Signal ein von einer Mikrowellenradarvorrichtung (10, 40) erzeugtes Signal eingesetzt wird.

7. Vorrichtung zur berührungslosen Erfassung von Ortsgrößen eines Objekts, insbesondere zur Durchführung eines Verfahrens nach einem der Ansprüche 1 bis 6, mit einem Sendeelement (24, 54) zum Senden eines Signals zu dem Objekt und einem Empfangselement (26, 56) zum Erfassen eines von dem Objekt reflektierten Signals, bei dem die Beschaffenheiten einer Oberfläche des Objekts ausgenutzt werden.

8. Vorrichtung nach Anspruch 7, die als Mikrowellenradarvorrichtung (10, 40) ausgebildet ist.

9. Computerprogramm mit Programmcodemitteln, um alle Schritte eines Verfahrens nach einem der Ansprüche 1 bis 6 durchzuführen, wenn das Computerprogramm auf einem Computer oder einer entsprechenden Recheneinheit, insbesondere in einer Vorrichtung (10, 40) nach Anspruch 7 oder 8, ausgeführt wird.
